Europäisches Patentamt

European Patent Office

Office européen des brevets

(11) Publication number: **0 013 180**
A1

## (12) EUROPEAN PATENT APPLICATION

(21) Application number: **79303062.8**

(22) Date of filing: **28.12.79**

(51) Int. Cl.³: **F 02 B 41/10**

(30) Priority: 02.01.79 US 19
25.05.79 US 42528

(43) Date of publication of application:
09.07.80 Bulletin 80/14

(84) Designated Contracting States:
AT BE CH DE FR GB IT LU NL SE

(71) Applicant: **Hill, Craig Chilton**
**Winter Street**
**Lincoln Massachusetts 01773(US)**

(72) Inventor: **Hill, Craig Chilton**
**Winter Street**
**Lincoln Massachusetts 01773(US)**

(74) Representative: **Denmark, James**
**c/o Bailey Walsh & Co. 9 Park Place**
**Leeds LS1 2SD(GB)**

(54) Internal combustion engine for compound use.

(57) An internal combustion piston engine operates without a blowdown phase and is compounded with a turbine (18) utilizing substantially steady inlet pressure. A compressor (1) delivers air compressed to at least that steady pressure to the inlet port (3) of a combustion chamber (13) whose exhaust port (16) is ducted to the turbine's inlet (17). Fuel is added to the compressed air in the chamber (13) and upon ignition of the charge, the piston (5) is driven in a power producing expansion stroke. On each upstroke of the combustion chamber piston (5), combustion products pass through the exhaust port (16) into the turbine inlet duct (17) while the compressed air simultaneously enters the chamber (13) through the inlet port (3). By late closure of the inlet and exhaust ports to restrict compression ratio and by regulation of the quantity of fuel burned per combustion period, the combined pressure rise in the chamber from compression and fuel combustion is limited to a value equal to or less than the subsequent chamber pressure decrease from the piston expansion stroke. Preferably, several cyclically phased combustion chambers provide substantially steady exhaust flow to the turbine.

FIG. 1

EP 0 013 180 A1

0013180

- 1 -

This invention relates in general to heat engines and more particularly pertains to an internal combustion engine of high thermal efficiency which utilizes a first expansion stage having a positive displacement element that is moved by the expanding gases to produce some power and utilizes a steady-flow turbine in a subsequent expansion stage to produce additional power.

This application is a continuation-in-part of my application Serial No. 19 which was filed in the U.S. Patent Office on January, 2, 1979. This application discloses an improvement upon the invention disclosed in my earlier application Serial No. 802,007 which was filed in the U.S. Patent Office on May 31, 1977. That earlier application is a continuation-in-part of my parent application 548,896 which was filed on February 11, 1975.

Exhaust driven turbines have been used with conventional 2-stroke and 4-stroke cycle engines to drive supercharger air compressors which increase engine power output by increasing the mass flow of air into the cylinder. Although much more energy remains in the exhaust which, in principle, could be converted to added shaft output by second stage expansion in a turbine, without added fuel consumption, in practice there has been little or no success in improving the brake fuel consumption efficiency of these engines with conventional cycles by turbocompounding. The primary cause for this failure is thermodynamic and has to do with the inherent nature of 2-stroke and 4-stroke cycles, which must both incorporate a rapid pressure reduction "blowdown" period in the cycle at the end of the expansion stroke period in order to permit a fresh intake or scavenging period to begin.

The rapid pressure drop of the blowdown period leads to thermodynamic irreversibilities which effectively make it impossible to convert a large portion of the potentially available exhuast energy to added shaft output by second stage expansion in a turbine. For example, if a pulse type "blowdown" turbine is employed for the purpose, the turbine will have very low energy conversion efficiency because of the rapid fluctuation of the pressure head across the turbine. A turbine of the constant inlet pressure type (also called a "steady-flow" turbine) has much better energy conversion efficiency. However, if such a steady-flow turbine stage is to be compounded with a conventional 2-stroke or 4-stroke cycle engine, it is necessary for the sake of volumetric efficiency to allow the cylinder exhaust gas to fall to intake pressure before it is expanded in the turbine. That pressure reduction greatly reduces the pressure head available to the turbine stage and in turn greatly reduces the fraction of exhaust energy available for conversion to shaft work by the constant inlet pressure turbine. In an unsupercharged 2-stroke or 4-stroke cycle engine, that fraction is zero. Thus, fundamental constraints imposed by the blowdown period greatly limit the improvement that can be attained in the brake thermal efficiency of conventional 2-stroke and 4-stroke cycle engines by turbo-charging.

The principal object of the invention is to provide a piston engine without a blowdown phase in its cycle, making it suitable for compounding with a turbine of the constant inlet pressure type to efficiently utilize the greatest possible percentage of available exhaust energy from the engine.

In accordance with the invention, the piston engine does

- 3 -

0013180

not operate on the conventional 2-stroke or 4-stroke cycle but rather operates on a cycle causing the cylinder pressure at the end of the piston expansion stroke which follows combustion to be either equal to or less than the cylinder intake pressure at the start of the cycle. That manner of operation eliminates the necessity inherent in conventional 2-stroke and 4-stroke engines of wasting most of the exhaust energy in a blowdown period and permits turbocompounding of very high overall combined thermal efficiency to be achieved by the employment of a constant inlet pressure turbine as a second expansion stage which can utilize the full pressure head existing between atmospheric pressure and the pressure in the cylinder just before opening of the exhaust valve. The invention consequently enables the conversion to work of a much greater fraction of fuel energy than it is possible to obtain from engines operating on a cycle requiring a blowdown exhaust period.

Unlike the conventional 2-stroke and the conventional 4-stroke engine, in an engine constructed in accordance with the invention the piston in the combustion chamber need not perform a compression stroke. Instead, all or a major part of the compression is performed outside the combustion chamber by a separate compressor. Every downstroke of the piston is a power stroke, as in the conventional 2-stroke cycle engine, but in the invention all or a large part of every upstroke of the piston is a period of overlapping intake and exhaust rather than primarily a compression period. During that period, which occurs during the time corresponding to the compression stroke in a conventional 2-stroke cycle engine, both the intake and exhaust ports are open at the same time. The open intake port enables compressed fresh air from the external compressor to enter the combustion chamber from the compressor to enter the combustion chamber from the compressor delivery duct while at the same time the partly expanded combustion products from the preceding combustion period leave the

- 4 -

chamber through the open exhaust port and enter the 0043180 duct of the turbine. By connecting two or more combust: n. chambers to the inlet duct of the turbine and properly phasing the opening of the exhaust ports, an approximately constant pressure can be maintained in the turbine inlet duct.

In the invention, the amount of fuel burned in the combustion chamber in each power stroke is regulated in relation to a limited permissable compression ratio and to the expansion ratio within the cylinder to cause the combined pressure rise in the chamber due to compression by the piston and to combustion of the fuel to be substantially equal to or less than the pressure decrease in the chamber which ensues during the subsequent expansion stroke of the piston. Proper regulation of the fuel for each power stroke and limitation of the compression ratio relative to the expansion ratio within the cylinder assures that when the exhaust and intake valves both open, the combustion chamber pressure will be equal to or less than the pressure in the compressor delivery duct at the inlet port, without the necessity of a blowdown phase.

In some embodiments of the invention, more engine output is often obtained from the turbine than from the piston section, particularly when the engine is operating at nearly maximum power. This characteristic of the turbocompound arrangement of the invention is among the reasons that embodiments of the invention can be extremely compact in relation to total power output even when compared with other engines that are highly superhcarged because turbines in general have much higher power to volume ratios than reciprocating pistons. Further, the invention enables that power to be achieved with much lower maximum combustion pressures than typically occur in either compression ignition engines or highly supercharged spark ignition engines.

Embodiments of the invention will now be described by way of example with reference being made to the accompanying drawings, in which:-

Fig. 1 schematically depicts the preferred embodiment of the invention.

Fig. 2 is a pressure-volume diagram comparing the cycle of operation of an embodiment of the invention in which substantially all compression is performed outside the cylinder with the cycle of operation of a conventional unsupercharged 2-stroke engine of equal clearance volume.

Fig. 3 is a pressure-volume diagram comparing the cycle of operation of an embodiment of the invention in which an appreciable part of the total compression is performed in the cylinder ·by the upstroke of the piston with the cycle of operation of a conventional unsupercharged 2-stroke engine of equal clearance volume.

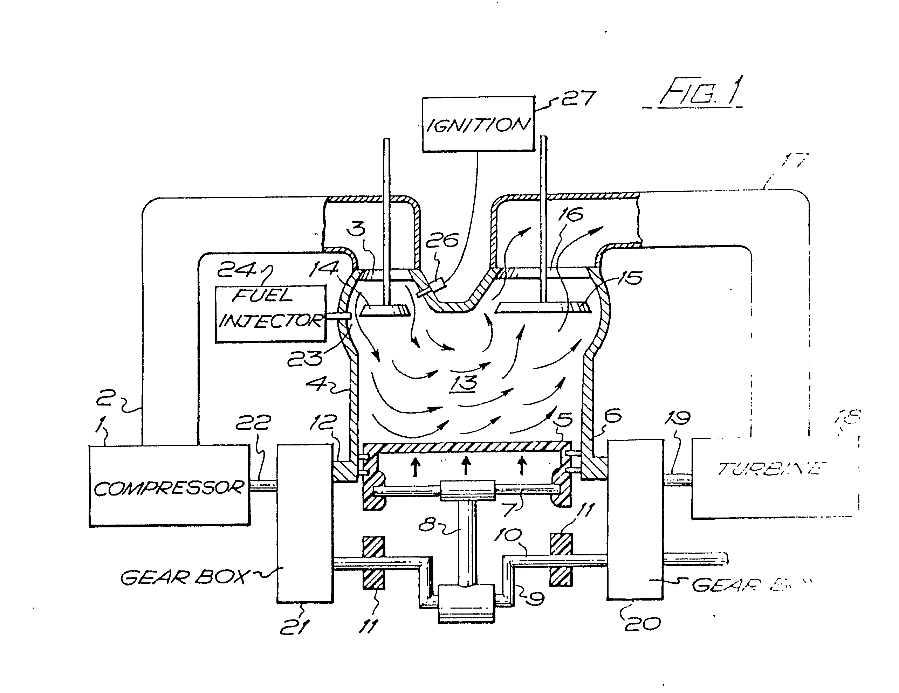

In the embodiment of the invention schematically shown in Fig. 1, a compressor 1 is arranged to delivery compressed air into a duct 2 extending to the inlet port 3 of a combustion chamber in cylinder 4. Disposed in the cylinder is a piston 5 arranged to reciprocate within the cylinder. Piston 5 carries sealing rings 6 and is attached in the conventional manner by a wrist pin 7 to a rod 8. At its other end, rod 8 is connected to a crank 9 which extends from a crankshaft 10. The crankshaft 10 is journalled in the conventional manner in beraings 11 of an engine block 12. Upon rotation of the crankshaft, the piston reciprocates in cylinder 4 and causes the enclosed volume of chamber 13 to cyclically vary from a maximum when the piston is at bottom dead center (BDC) to a minimum when the piston is. at top dead center (TDC) of its stroke.

Disposed in inlet port 3 is a valve 14 which is opened and closed in coordination with the reciprocation of piston 5 by a valve actuating mechanism which can be of conventional construction. An exhaust valve 15 situated in exhaust port 16 of cylinder 4 is opened and closed by a similar valve actuating mechanism in coordination with the reciprocating

0013180

motion of piston 5. Gases exhausted from chamber 13 through port 16 flow into turbine inlet duct 17 and are then expanded through turbine 18 to cause the turbine to rotate. The output shaft 19 of the turbine is coupled to crankshaft 10 by reduction gearing 20 which is preferably of the variable ratio type. Compressor 1 is driven by the shaft 10 through variable ratio reduction gearing 21 which transmits power to the shaft 22 of the compressor.

In combustion chamber 13, a fuel injection orifice 23 permits introduction of fuel into the chamber through a fuel injector 24 supplied by a fuel pump 25. The fuel system is arranged to control the frequency, duration, timing, and amount of fuel injected per combustion phase event in accordance with the invention. An ignition device 26, such as a spark plug is controlled by a timing mechanism 27 to ignite the fuel in chamber 13 at an appropriate time.

In the operation of an embodiment of the engine depicted in Fig. 1, a simultaneous intake and exhaust period begins in chamber 13 each time piston 5 reaches bottom dead center on the downstroke. At that time, chamber 13 is at its maximum volume. In Fig. 1,the piston is depicted in a position somewhat beyond bottom dead center when the piston is on its upstroke. Intake valve 14 and exhaust valve 15 are timed to open approximately simultaneously when piston 5 is near or at bottom dead center. In the embodiment being described both valves remain open for substantially the entire upstroke of piston 5. Because valve 14 is open during that time, the air compressed by compressor 1 flows out of delivery duct 2 and through inlet port 3 into chamber 13 while the partially expanded combustion products from the antecedant combustion period flow out of chamber 13 through the open exhaust port 16. Inasmuch as compressed air is continuously delivered by compressor 1 into duct 2 and the flow of the exhaust from turbine inlet duct 17 through the turbine is also continuous, only a small gradient of falling pressure is

0013180

required between the compressor delivery duct and the turbine inlet duct when valves 14 and 15 are open to cause fresh compressed air to flow into chamber 13 through the inlet port while combustion products are simultaneously exhausted from that chamber through the open exhaust port.

Delivery duct 2 and turbine inlet duct 17 are constructed with enough volume capacity to minimize pressure fluctuation in the ducts during varying rates of flow into intake port 3 and out of exhaust port 16 at different periods in the operating cycle while the engine is operating at constant speed. Although the rudimentary embodiment of the invention depicted in Fig. 1 has but one combustion chamber 13, it is easier to achieve a steady rate of flow of compressed air out of the delivery duct where the duct supplies several combustion chamber cylinders which have their intake periods staggered to occur symmetrically during each revolution of the crankshaft. Connection of the outlet ports of the plural combustion chambers to the same turbine inlet duct also serves to minimize pressure fluctuations in that duct.

When piston 5 reaches top dead center or is near that position, the volume of chamber 13 is then at its minimum or close to it and valves 14 and 15 close more or less simultaneously to end the intake-exhaust period. Although some mixing between the incoming fresh compressed air and the combustion products flowing out through exhaust port 16 will occur during the intake-exhaust period, that mixing can be minimized by proper design of the combustion chamber's configuration and the placement of the intake and exhaust ports. Consequently, the shape of the combustion chamber 13 depicted in Fig. 1 as well as the placement and size of the intake and exhaust ports is primarily schematic.

At approximately the time piston 5 reaches top dead center, just after intake valve 14 and exhaust valve 15 have closed, fuel injector 24 injects fuel, such as gasoline or diesel fuel, into chamber 13 where the fuel is ignited as rapidly

0013180

as possible by spark igniter 26 or is ignited in some other manner. Because the expansion ratio in accordance with the invention in the Fig. 1 embodiment described is relatively small compared to conventional piston engine expansion ratios, the volume of chamber 13 changes relatively little during the period of about $30^\circ$ on each side of top dead center of the stroke of piston 5. Consequently, the combustion at very nearly constant volume is obtained by causing combustion to occur primarily within that period and while both the intake and exhaust valves are closed. Although early valve closure will cause some degree of compression of the conents of chamber 13, the resultant compression ratio is relatively small. Compared to ratios ordinarily utilized in conventional spark ignition engines, the compression ratio of the piston stage is very limited in embodiments of the invention because much of the compression work is performed by the compressor before the piston section of the engine. In the embodiment now being described, essentially all compression is performed by the external compressor 1 to enable the cylinder 4 and piston 5 to function primarily as a constant volume combustion chamber and first stage expander to a turbine second stage. The expanstion ratio of the first stage expander in such embodiments of the invention will typically be less than 3. A $20^\circ$ early valve closure in an embodiment with a 2.5 expansion ratio would, for example, produce a compression ratio by the piston of only 1.07. In other permissible embodiments, to be described later a substantially greater in-cylinder compression ratio may be employed.

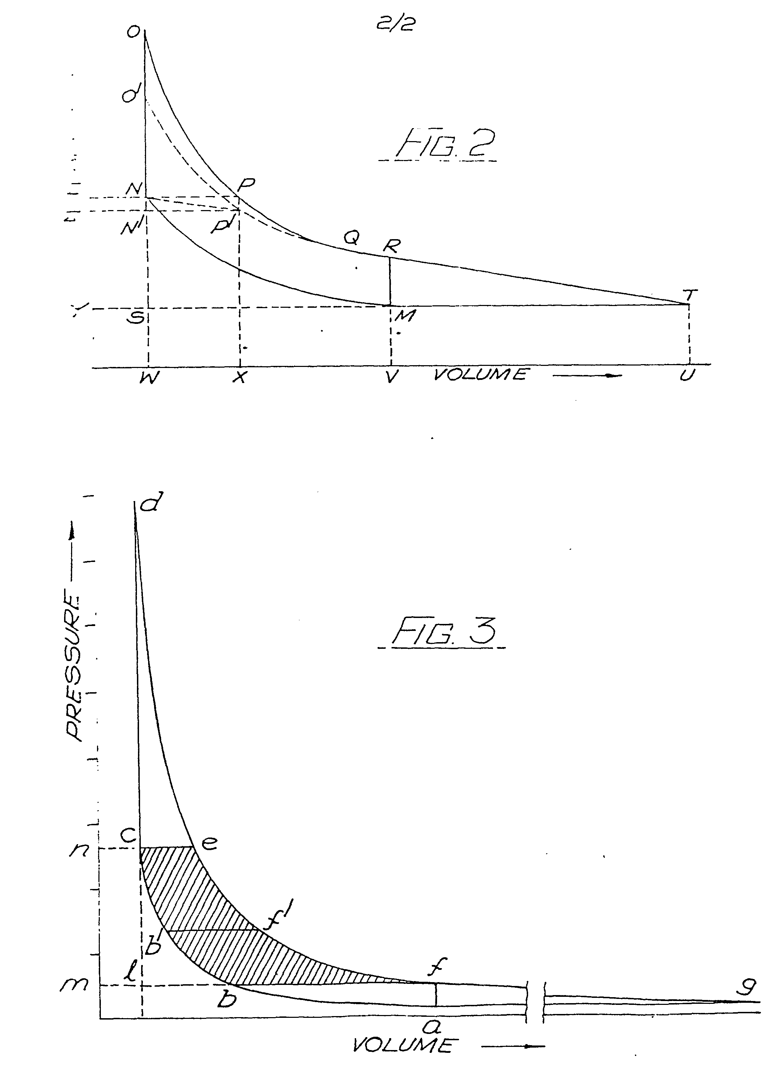

Referring now to the pressure-volume diagram of Fig. 2 vertical line N-O shows the pressure rise in the chamber 13 with ideal constant volume combustion. As piston 5 moves downward following combustion, the intake and exhaust valves are still closed and power is produced by the expansion of the working medium acting on piston 5. As the volume of chamber 13 increases, the pressure in the chamber decreases, as indicated in Fig. 2 by the curve

O-P. In the Fig. 2 diagram, minimum cylinder volume is indicated by the horizontal distance ZN from the vertical axis ot point N and maximum cylinder volume by the distance ZP from the vertical axis to point P. The expansion ratio of the piston section is the ratio of the larger distance to the smaller. Point P in Fig. 2 represents the pressure and volume in the cylinder when piston 5 reaches bottom dead center with intake and exhaust valves still closed. The cylinder pressure at point P is equal to the pressure in the compressor delivery duct, as represented by point N. When piston 5 is at bottom dead center or near it, the intake and exhaust valves open again to enable another simultaneous intake and exhaust period to begin on the upstroke of the piston. It is permissible to have either or both the intake and exhaust valves being to open before the piston reaches bottom dead center of the expansion stroke to allow a much longer scavenging period than is practical in conventional 2-stroke engines in which the piston performs the major compression function.

In Fig. 2 line P-T represents the additional increase in volume and decrease in pressure which occurs when the working medium expands through the turbine stage with the inlet pressure to the turbine maintained constant at P. In order to lessen stress on valve operating mechanisms and to promote efficient gas flow, wide variations in valve timing are permissible. Either the inlet or the exhaust valve or both may begin to open before or after the piston has reached bottom dead center and before or after cylinder pressure has decreased to the value at P. To assure adequate scavenging of the hot combustion gases from the cylinder, it is permissible to restrict the amoutn of fuel injected to cause the combustion pressure rise in the cylinder to be less than the pressure decrease due to the piston expansion stroke. In that case, the pressure in the cylinder, as shown in Fig. 2 rises only to point 0' vertically below 0, and at the same expansion ratio, cylinder pressure

0013180

in the expansion stroke decreases to P', vertically below P, as shown by the dotted line O'-P', with subsequent expansion in the turbine approximately along P'-Q-T. In this operating condition, the turbine steady intake pressure at point P', is lower than the steady compressor delivery pressure at point N, causing positive flow of fresh compressed air into and burned gases out of the cylinder while both intake and exhaust valves are open. During this period, although there is no compression, cylinder pressure tends to rise from P' to the compressor delivery pressure at N, approximately along the slping line P'-N. Also, it is not harmful if turbine inlet duct pressure rises slightly as from P' nearly to P during the scavenging period so long as the pressure head remains fairly steady.

The ideal work output of the first expansion stage is indicated in Fig. 2 by the area O-P-X-W-O below curve O-P and the work output of the turbine stage is indicated by the area P-T-U-X-P below curve P-T. Negative work of the compressor 1 is indicated by the area N-M-V-W-N below the N-M curve, and exhaust pump work by the turbine is represented by the area M-T-U-V-M below line M-T. Net positive work of the cycle is accordingly shown by the enclosed area M-N-O-P-T-M. For comparison, in a conventional piston engine which has the same compression ratio as the compression ratio of the compressor 1 and piston-cylinder stage of the Fig. 1 embodiment, the net work of the cycle of the conventional engine is represented by the area M-N-O-P-R-M. Consequently, the indicated total work area for the two expansion stages of the Fig. 1 embodiment is larger than that of the conventional piston engine by the area M-R-T-M. But as explained earlier, in a conventional engine with a 2-stroke or 4-stroke cycle, thermodynamic reasons prevent reclamation of more than a small fraction of this additional work potential because the pressure at the end of the expansion stroke at point R, is considerably greater than the pressure at the cylinder intake port, at point M, and a

0013180

blowdown or pulse thpe turbine which must be employed would tend to have a very low energy conversion efficiency because the turbine pressure head falls so drastically from R to M.

In conventional 2-stroke and 4-stroke cycle engines, the parameters determining limitation on the amount of fuel injected per cycle primarily include the allowable maximum cycle pressure for engine exhaust emissions. While these are also important criteria in operation of an embodiment of the invention, an additional objective of the invention is the elimination of the blowdown period that inherently occurs in conventional piston engine operating cycles. In the invention, this additional objective limits the fuel burned per combustion event in the first stage combustion chamber to an amount which causes a combustion pressure rise equal to or less than the pressure decrease in the chamber caused by the expansion stroke of the piston.

In embodiments where a substantial degree of compression occurs within the cylinder, the fuel-air ratio limitation is further limited by relation to the compression and expansion ratios within the cylinder such that under normal operating conditions the combined pressure rise due to combustion and compression will be less than or equal to the pressure decrease due to expansion by the piston stroke. This relationship between the total pressure increase and total pressure decrease after valve closure has occurred, guarantees that the inlet system pressure will be greater than or equal to the cylinder pressure at the end of the piston's expansion stroke, and no blowdown phase will thus be necessary in the opearting cycle.

Although the simultaneous intake and exhaust process in the invention is similar in some respects to the scavenging process in a conventional 2-stroke engine, in some embodiments of the invention the working medium is compressed entirely before rather than after it enters the combustion chamber.

0013180

Consequently the scavenging process in such embodiments takes place over a very much longer period of shaft rotation than is possible in the conventional 2-stroke cycle engine because the upstroke period of the piston alloted for compression in the 2-stroke is used in the invention for simultaneous intake and exhaust in lieu of having the piston perform a compression stroke. In the conventional 2-stroke cycle engine, the intake port very seldom opens or closes at more than $60^{\circ}$ from bottom dead center, limiting intake time to a maximum of about $120^{\circ}$. In the invention, the intake-exhaust period could also begin as much as $60^{\circ}$ before the piston reaches top center, or even goes beyond top center. The long valve opening and closing times in embodiments without in-cylinder compression allows efficient cylinder scavenging at much higher rotational speeds than is practical in the conventional 2-stroke cycle engine. Even where some fresh compressed air is lost through the exhaust port, it is much less harmful in the invention than in the conventional 2-stroke or 4-stroke cycle engine because a much larger fraction of the compression work will be reclaimed by the constant inlet pressure turbine in the invention than it is possible to reclaim with the lower efficiency blowdown turbine. It is entirely permissible to operate an engine embodying the invention so that some compressed inlet air is short-circuited to the turbine through the exhaust port 16 during the intake-exhaust period because the short circuited air lowers the average exhaust temperature in steady state operation and even permits transient operation at higher temperatures without damage to the exhaust valve or the turbine.

The Fig. 2 pressure-volume diagram shows that in an engine embodying the invention where thereis no compression in the cylinder, the piston displacement can be considerably smaller than that of a conventional 2-stroke cycle engine accommodating the same mass of air per piston power stroke. In the conventional 2-stroke engine, the mass of scavenging

00131.80

air is forced into the cylinder at the pressure and specific volume indicated by point M in the diagram and the piston thereupon moves upward in its compression stroke to increase the pressure and reduce the volume to the specific volume indicated by point N. The horizontal distance M-S therefore represents the volume displaced by the piston. In contrast, in the invention, air entering the cylinder has already been compressed to the density indicated by point N before it enters the cylinder and as the piston reaches top center on its upstroke, the compressed air mass in the cylinder is equal to the mass of air in the conventional 2-stroke cycle engine when its piston is at top center because both engines have the same clearance volume as indicated in Fig. 2 by the equal horiztonal distances S-Y and N-Z. In the invention, the volume displaced by the piston on its upstroke is represented by the horizontal distance P-N. It is evident from the Fig. 2 diagram that the maximum volume of the cylinder in the invention represented by the distance P-Z is considerably smaller than the maximum volume of the cylinder in the conventional engine represented by the distance M-Y. It is also evident that the displacement of the piston in the invention represented by the distance P-N is considerably smaller than the displacement of the piston in the conventional engine represented by the horizontal distance M-S. Although the net work area P-N-O-P of the piston section of the invention is clearly smaller than the net work area M-N-O-R-M of the conventional 2-stroke cycle engine, the total work area of the embodiment of the invention is the area N-O-P-T-M-N because of the added work P-T-M-N-P provided by the constant inlet pressure turbine stage. That total work area is clearly larger than the net work area of the conventional engine. The efficiency of the combined cycle of the invention embodiment is therefore clearly better than that of the conventional 2-stroke cycle engine. Inspection of Fig. 2 also makes it clear that, even at the same maximum pressure O, the mean pressure on the piston of the embodiment is much greater than that on the piston in the conventional engine, particularly

if the work of the turbine is assigned to the output of the piston. Even if the conventional 2-stroke cycle engine were provided with a blowdown turbine to reclaim some of the potential work represented by area M-R-T-M, the efficiency of the blowdown turbine would be so much lower than that of the constant inlet pressure turbine that the total work would still be much less for the same amount of fuel burned per cycle.

Although the invention permits the construction of extremely compact and efficient turbocompound engines in which the piston stage performs no compression work, embodiments using exactly the same underlying principle are also entirely permissible where it is very advantageous for the piston to perform a fairly large fraction of total compression. In these embodiments, in normal, steady operation, the combined pressure rise in the combustion chamber cylinder due both to compression of the working medium by the piston and to temperature rise from the combustion of the fuel is limited to a value equal to or less than the subsequent pressure decrease in the cylinder from the piston's expansion stroke. This requirement eliminates the blowdown phase characeristic of conventionally used engine cycle.

The figure 3 pressure volume diagram illustrates the required limiting relationship which must be attained in an embodiment between inlet pressure from the compressor, the pressure increase from compression in the cylinder, combustion pressure rise in the cylinder and pressure decrease in the cylinder from the piston expansion stroke expansion ratio. For comparison pruposes, area a-b-c-d-e-f-a in Figure 3 can be considered to represent the ideal cycle in a conventional upsurpercharged 2 or 4 stroke Otto cycle engine, with adiabatic compression stroke indicated by line a-c, constant volume combustion pressure rise by vertical line c-d, the expansion stroke volume increase and pressure decrease by line d-f, and the constant volume blowdown phase by vertical line f-a. An embodiment of the invention can be constructed in a configuration essentially very similar to that of the Figure 1 embodiment as pre viously described. In this

0013180

modified embodiment, the compressor delivery pressure is equal to the pressure at point b in Figure 3, which is in turn equal to or greater than the pressure at point f, the cylinder pressure when the piston has reached bottom dead center of its expansion stroke. In the comparison conventional engine, when the piston reaches bottom center at this same volume and pressure indicated at point f, the exhaust port then opens and the cylinder pressure drops very rapidly in the blowdown phase to the pressure shown at point a. By contrast, in the present embodiment, when the piston has reached bottom center and the volume and pressure shown at point f, both the exhaust and inlet ports then open at approximately the same moment and the scavenging-exhaust phase occurs without any intervening blowdown period during the piston upstroke immediately following. Line f-b depicts the decrease in volume in the cylinder of the embodiment engine during most of the piston upstroke as fresh compressed working medium from the compressor flows into the cylinder through the open intake port and the partially expanded combustion products from the previous cycle flow at fairly stead pressure out of the exhaust port into the turbine inlet duct for further expansion extended along line f-g to atmospheric pressure. However, instead of remaining open substantially throughout the upstroke of the piston, as is the case in embodiments where no compression occurs in the cylinder, in the present embodiment the inlet and exhaust valves both close when the piston is still moving upwards, as for example at point b, with total piston displacement indicated by line length f-1 and cylinder volume at the moment of valve closure indicated by line length b-m. With both valves closed, compression by the piston consequently occurs in the cylinder causing the pressure and volume change denoted by curve b-c, with maximum compression occurring at point c, when the piston has just reached top dead center. A regulated amount of fuel is added and ignited at approximately this time, with assumed constant-volume combustion pressure rise shown

- 16 -

00131 80

by vertical line c-d. The valves remain closed and cylinder pressure decreases along line d-e-f during the expansion stroke of the piston, ending the cycle when the valves again both open as the piston reaches bottom center at point f and a new cycle then begins. In an embodiment where compression occurs within the cylinder, the fuel-air ratio is regulated to limit the combined pressure rise due to in-cylinder compression and combustion to a value less than or at most equal to the pressure decrease in the cylinder from the piston's expansion stroke. In the operation of an embodiment with the Figure 3 pressure-volume diagram, the maximum allowable compression ratio in the cylinder for a given maximum pressure d, with a combustion pressure rise c-d and an expansion stroke pressure decrease d-f, is the ratio of line length b-m, representing total cylinder volume at the moment of valve closure, to line length l-m, representing cylinder clearance volume with the piston at top center. Any substantially greater degree of compression or greater combustion pressure rise with the other pressures and ratios remaining as stated, would result in a consistently greater exhaust pressure than inlet pressure, as in conventional engines, and would violate the principle of the invention which eliminates the blowdown phase characteristic of conventional engines operation.

As an example, in an embodiment where the expansion ratio in the cylinder equals 8, the pressure decrease divisor would aproximate $8^{1.32}$, or about 15.56. The permissible combined compression and combustion pressure rise multiple would therefore have to be less than 15.56. If the combustion pressure rise multiple equals 3.0, then the compression pressure rise multiple must be limited to 15.56/3 = 5.187. A realistic approximation of the compression ratio limit in this instance would be $5.187^{1/1.38}$, or about 3.3 times or less. Stated another way, if the piston compression ratio equals 3.3 and the piston expansion ratio equals 8, the maximum permissible constant-volume combustion pressure rise multiple equals 3 or less. It can easily be calculated that to have a maximum compression ratio of 3.3 with an expansion ratio of 8, the inlet

0013180

...nd exhaust valves must close no sooner than about 69.5° before the piston reaches top dead center of its stroke, or about 110° past bottom center of the upstroke. Referring again to Figure 3, it is obvious that for a given embodiemtn, any other line f'-b' parallel to f-b within the shaded area f-c-e-f of the Figure 3 pressure volume diagram could be utilized in determining allowable combinations of the related values of inlet pressure, in-cylinder compression and expansion ratios and combustion pressure-rise ratio. In real cases, the designed combined pressure rise would almost always be somewhat less than the expansion stroke pressure decrease, in order to insure adequate scavenging of the combustion gases during the relatively shorter period of flow available with valve closure occurring before top dead center.

The choice of any particular combination of compression ratio, expansion ratio and combustion pressure rise would depend primarily on the application for which a given embodiment is designed. As the compression and expansior ratios in the cylinder are increased, the fraction of total output by the piston section increases and the fraction of output by the turbine section decreases. Thus, it will be possible in some embodiments to drive the compressor by the piston section output alone and if desired to allow the steady flow turbine expansion stage to drive a separate output shaft. Such an arrangement has obvious advantages in applications where low-speed stall torque capability is important. In that free-turbine configuration, embodiments are potentially superior to similar twin-turbine gas turbine engines for automotive applications because the gasifier section of the engine embodying the invention will have much less variation in total compression and expansion ratios at varying speeds than does the gasifier section of the gas turbine engine, and thermal efficiency will thus be maintained better over a wider range of operating speed than is the case with the gas turbine engines utilizing only a dynamic compressor.

0013180

embodiments employing some degree of in-cylinder compression by the piston will in general tend to have a somewhat larger total piston displacement than embodiments where all compression is performed by the external compressor, and they will naturally tend also to have lower piston section exhaust temperatures at the same cylinder fuel-air ratio, because of the generally larger piston section expansion ratio.

Embodiments of the invention utilizing some compression by the piston, as described, do not alter the fundamental method of the invention which enables the full exhaust pressure of the piston section of the compound engine to be efficiently utilized in the steady-flow exhaust turbine by elimination of the wasteful blowdown phase which characterizes the operation of conventional engines.

It is of course apparent that the constant inlet pressure turbine referred to in the preceding discussion can be replaced in the compound arrangement by other types of engines that utilize a flow of gases at a substantially steady inlet pressure. However, at the present time, no other type of expander is known which can be substituted for the steady-flow turbine without an appreciable decrease in the efficiency of the compound arrangement.

- 19 -

0013180

CLAIMS

1.    An internal combustion engine for compounding with an engine of the type using an inlet gas flow at a substantially steady inlet pressure, the internal combustion engine comprising a cylinder providing a combustion chamber therein, the chamber having an intake port and an exhaust port, a piston disposed to reciprocate in the chamber to cyclically change the volume of the chamber, an intake valve arranged to open and close the intake port, an exhaust valve arranged to open and close the exhaust port, exhaust duct means for connection to the engine to be compounded, a compressor for compressing the working medium to at least said steady inlet pressure, intake duct means connecting the compressor outlet to the intake port of the combustion chamber, means for adding fuel to the compressed working medium which is caused to enter the combustion chamber, and means governing the operation of said intake and exhaust valves, the governing means causing those valves to remain open simultaneously for substantially the full upstroke of the piston whereby for at least the major portion of every upstroke compressed air from the inlet duct is able to enter the chamber without being further compressed while the combusted gases in the chamber are simultaneously expelled from the exhaust port into the exhaust duct means.

2.    The internal combustion engine according to claim 1, wherein the means for adding fuel to the compressed working medium includes a fuel regulator for regulating the amount of fuel added to cause the fuel burned in each power stroke of the piston to be limited to an amount which causes the combustion pressure rise to be substantially no more than the pressure decrease due to the expansion stroke of the piston whereby the pressure in the combustion chamber at the end of the expansion stroke in ordinary operation is substantially equal to or less than said steady inlet pressure.

3. The internal combustion engine according to claim 2, further comprising ignition means for igniting the fuel charge in the cylinder, and timing means connected to the ignition means for causing ignition when the piston is approximately at the top of its stroke.

4. The internal combustion engine according to claim 1 compounded with a turbine of the type utilising a substantially steady inlet gas flow, and wherein the inlet of the turbine is connected to the exhaust duct means.

5. A compound engine according to claim 4, wherein the internal combustion engine has a plurality of similar combustion chambers having their exhaust ports connected to the exhaust duct means and wherein the means governing the operation of the intake and exhaust valves phases the operation of the intake and exhaust valves associated with the plurality of combustion chambers to provide a substantially steady flow of gases to the inlet of the turbine.

6. The compound engine according to claim 4, further comprising means connecting the piston of the internal combustion engine to a drive shaft, means coupling the drive shaft to the compressor for causing the compressor to be driven by the drive shaft, and speed changing means coupling the drive shaft to the power output shaft of the turbine.

7. An internal combustion engine for compounding with an engine of the type using an inlet gas flow at a substantially steady inlet pressure, the internal combustion engine comprising a cylinder providing a combustion chamber therein, the chamber having an intake port and an exhaust port, a piston disposed to reciprocate in the chamber to cyclically change the volume of the chamber, an intake valve arranged to open and close the intake port, an exhaust valve arranged to open and close the exhaust port, exhaust duct means for connection to the engine to be compounded, the exhaust duct means receiving gases expelled from the exhaust port, a compressor for compressing the working medium to at least said steady inlet pressure, intake duct means connecting the compressor outlet to the intake port of the combustion chamber, means for adding fuel to the compressed working medium which is caused to enter the combustion chamber, means governing the operation of said intake and exhaust valves, the governing means causing those valves to remain closed simultaneously for at least some part of the upstroke of the piston whereby the piston performs an appreciable fraction of the total compression, and the expansion in the cylinder on the downstroke of the piston causing the ensuing pressure decrease in the chamber to be equal to or greater than the preceding pressure rise in the cylinder resulting from compression by the piston and combustion in the chamber.

8. The internal combustion engine according to claim 7, further comprising ignition means for igniting the fuel charge in the cylinder, and timing means connected to the ignition means for causing ignition when the piston is approximately at the top of its stroke.

9. An internal combustion engine for compounding with an engine of the type using an inlet gas flow at a substantially steady inlet pressure, the internal combustion engine comprising a cylinder providing a combustion chamber therein, the chamber having an intake port and an exhaust port, a piston disposed to reciprocate in the chamber to cyclically change the volume of the chamber, an intake valve arranged to open and close the intake port, an exhaust valve arranged to open and close the exhaust port, exhaust duct means for connection to the engine to be compounded, the exhaust duct means receiving gases expelled from the exhaust port, a compressor for compressing the working medium to at least said steady inlet pressure, intake duct means connecting the compressor outlet to the intake port of the combustion chamber, means governing the operation of the intake and exhaust valves, the governing means causing those valves to remain closed for the final portion of every piston upstroke period whereby a limited but appreciable fraction of the total compression work is effected by the piston upstroke, the compression effected in the chamber by the piston upstroke being limited to a ratio which is less than the expansion ratio in the chamber, and means for regulating the addition of fuel to the working medium whereby the compresses working medium in the combustion chamber is charged with a regulated amount of fuel such that in normal operation of the engine the rise in pressure in the chamber due to combustion of the fuel is limited to an amount which when added to the rise in pressure in the chamber due to the compression of the working medium effected by the piston is not greater than the subsequent pressure decrease in the chamber resulting from the piston's expansion stroke thereby ensuring the elimination of a blowdown phase.

_FIG. 1_

IGNITION 27

17

FUEL INJECTOR 24

14 3 26 16

15

23

4

13

2

COMPRESSOR

1 22 12 5 6 19

TURBINE

GEAR BOX

7 8 10 11 GEAR BOX

21 11 9 20

0013180

2/2

FIG. 2

FIG. 3

European Patent
Office

| DOCUMENTS CONSIDERED TO·BE RELEVANT | | | CLASSIFICATION OF THE APPLICATION (Int. Cl.3) |
|---|---|---|---|
| Category | Citation of document with indication, where appropriate, of relevant passages | Relevant to claim | |
| X | DE - C - 568 855 (BÜCHI)<br>* page 1 to page 2, column 1 *<br>-- | 1,4,5,<br>7,9 | F 02 B 41/10 |
| | DE - C - 331 531 (TOBLER)<br>* claim; fig. *<br>-- | 1 | |
| | US - A - 2 939 441 (LUTTRELL)<br>* column 1 to column 2, line 23;<br>fig. 1, positions 83 to 88 *<br>-- | 1,3,4,<br>6,8 | TECHNICAL FIELDS SEARCHED (Int.Cl.3) |
| A | DE - C - 839 882 (MASCHINENFABRIK<br>AUGSBURG-NÜRNBERG AG)<br>* page 1 to page 2, line 36 *<br>-- | | F 02 B 41/00<br>F 02 D 23/00 |
| A | US - A - 3 498 052 (SILVERN)<br>* abstract, line 14 *<br>---- | | |

CATEGORY OF CITED DOCUMENTS

X: particularly relevant
A: technological background
O: non-written disclosure
P: intermediate document
T: theory or principle underlying
   the invention
E: conflicting application
D: document cited in the
   application
L: citation for other reasons

&: member of the same patent
   family,
   corresponding document

The present search report has been drawn up for all claims

| Place of search<br>Berlin | Date of completion of the search<br>25-03-1980 | Examiner<br>STÖCKLE |
|---|---|---|

EPO Form 1503.1 06.78